# FASCICULE DE BREVET EUROPEEN

(11) **EP 0 638 239 B1**
(45) Date de publication et mention de la délivrance du brevet: **18.03.1998**
(21) Numéro de dépôt: 94401734.2
(22) Date de dépôt: 28.07.1994
(51) Int. Cl.: A21C 11/06, A21B 5/02

(54) **Machine de fabrication industrielle de barquettes ingérables destinées à contenir des aliments**
Vorrichtung zur Herstellung von essbaren Schalen für Nahrungsmittel
Machine for producing edible boats for holding foodstuffs

(30) Priorité: 03.08.1993 FR 9309546
(43) Date de publication de la demande: 15.02.1995
(73) Titulaire: CREAPAIN Société Anonyme, F-03260 Saint Germain des Fosses (FR)
(72) Inventeur: Paquier, Franck, F-03200 Vichy (FR)
(74) Mandataire: Dawidowicz, Armand

(56) Documents cités:
- EP-A- 0 166 042
- EP-A- 0 350 529
- FR-A- 2 291 709
- US-A- 3 911 805
- US-A- 4 095 926
- US-A- 4 108 033
- US-A- 5 149 594

## Description

L'invention concerne la fabrication de barquettes ingérables destinées à recevoir des aliments pour l'alimentation rapide.

Un procédé de fabrication de telles barquettes est décrit dans WO-A-90.01877. Ce procédé prévoit la préparation d'une pâte panifiable et l'utilisation d'une plaque moule présentant des reliefs en saillie correspondant chacun à la forme intérieure d'une barquette, cette plaque-moule étant utilisée pour la cuisson au four des morceaux de pâte recouvrant les reliefs. Selon ce procédé connu, la couche de pâte ou abaisse est placée sur la plaque-moule et la couche de pâte se trouvant entre les bords des reliefs est découpée et éliminée avant la cuisson.

La mise en oeuvre à l'échelle industrielle de ce procédé connu pose des problèmes liés en particulier à la découpe et à l'élimination de la pâte entre les reliefs de la plaque-moule qui sont des opérations difficiles à automatiser et à effectuer à grande vitesse de manière répétitive. Une autre difficulté provient de la nécessité d'utiliser une plaque moule différente lorsque la forme et/ou les dimensions des barquettes varient.

La présente invention vise en conséquence à fournir une machine permettant de fabriquer à l'échelle industrielle des barquettes ingérables du type précédent à vitesse éievée, avec une reproductivité élevée, tout en limitant le coût d'une modification de forme et/ou de dimensions du produit fabriqué.

A cet effet, l'invention a pour objet une machine de fabrication industrielle de barquettes ingérables destinées à contenir des aliments, ladite machine effectuant la découpe de morceaux individuels de pâte dans une abaisse éventuellement farinée et la pose desdits morceaux sur un relief de moulage et le transfert vers un four de cuisson, caractérisé en ce qu'elle comprend un tapis d'amenée d'une abaisse de pâte d'épaisseur contrôlée depuis un laminoir, un tapis de transfert portant des moules jointifs munis chacun d'une pluralité de reliefs alignés transversalement correspondant à la forme de la cavité de la barquette, ledit tapis de transfert se raccordant à l'extrémité aval du tapis d'amenée, un rouleau de découpe portant plusieurs séries d'empreintes axiales creuses à bord coupant correspondant à la forme des morceaux à découper dans l'abaisse, ledit rouleau de découpe étant disposé de manière à entrer en contact avec l'abaisse au cours de son déplacement, un rouleau presseur portant au moins une série axiale d'empreintes creuses de forme complémentaire de celle des reliefs desdits moules, ledit rouleau presseur étant disposé de manière à faire épouser à l'abaisse disposée sur les moules la forme desdits reliefs, et des moyens de séparation et de récupération de la pâte entre les reliefs, lesdits rouleaux se déplaçant à une vitesse tangentielle égale à la vitesse dudit tapis de transfert et dudit tapis d'amenée.

La machine selon l'invention permet donc, par l'utilisation de rouleaux de découpe et presseur portant chacun un grand nombre d'empreintes périphériques répartis en plusieurs lignes axiales, d'effectuer la découpe et la pose sur les reliefs des moules à très grande vitesse. L'utilisation de moules individuels à plusieurs empreintes alignées, qui sont maintenus jointifs pendant les opérations de découpe et de pose des morceaux de pâte, permet de faire passer les moules ainsi revêtus de morceaux de pâte directement dans un four, de préférence un four-tunnel, après quoi les moules peuvent être ramenés, éventuellement après nettoyage, au tapis de transfert.

De préférence, la machine comprend une table à rouleaux motorisés recevant les moules, ladite table ayant une vitesse de transfert supérieure à la vitesse de déplacement du tapis de transfert et un moyen d'amenée synchronisée des moules sur le tapis de transfert. Selon une forme de réalisation de l'invention, ledit moyen d'amenée synchronisée est constitué par un arrêtoir commandé interposé entre la table à rouleaux et le tapis de transfert. Selon une variante préférée, le moyen d'amenée synchronisée est constitué par un pignon synchronisé à la vitesse du tapis de transfert et coopérant avec une saillie ou un évidement des moules. La table à rouleaux sert ainsi d'accumulateur pour les moules, la différence de vitesse entre la table à rouleaux et le tapis de transfert assurant que les moules sont serrés les uns contre les autres sur le tapis de transfert.

Selon une forme de réalisation de l'invention, le tapis d'amenée de l'abaisse est monté sur un pivot pour assurer un centrage automatique de l'abaisse. Ledit tapis d'amenée peut avantageusement être équipé d'un palpeur de mesure de l'épaisseur de pâte, de préférence à jet d'air comprimé pour éviter tout contact avec la pâte.

De préférence, le rouleau presseur est monté sur un dispositif d'équilibrage destiné à éviter l'endommagement des moules, qui sont avantageusement munis d'un revêtement en silicone. Avantageusement, le rouleau de découpe est maintenu à un écartement fixe réglable, par exemple au moyen d'un système à vis micrométriques.

On peut prévoir que le rouleau de découpe et/ou le rouleau presseur sont constitués de galets individuels formés, assemblés côte-à-côte sur un axe motorisé synchronisé avec le tapis d'amenée de l'abaisse et le tapis de transfert des moules.

Selon une option de l'invention, un rouleau motorisé muni d'empreintes de scarification est disposé sur le tapis d'amenée, en contact avec la pâte. On peut ainsi former sur la pâte des creux qui donneront à la barquette, après cuisson, un aspect déterminé tel que celui d'une baguette de pain français.

Selon un premier exemple de construction de la machine selon l'invention, le rouleau presseur est disposé en amont du rouleau de découpe. La découpe est ainsi effectuée sur les moules après formage de la pâte par le rouleau presseur.

Selon une forme d'exécution préférée de l'invention, le rouleau de découpe est disposé en regard du tapis d'amenée de l'abaisse. La découpe a ainsi lieu préalablement au formage, de sorte que le formage synchronisé sur les moules assure la séparation nette des déchets de pâte qui peuvent ainsi être facilement récupérés puis éventuellement recyclés.

Avantageusement, la machine comporte un dispositif d'aspiration, de préférence à venturi, des déchets entre les morceaux séparés et motorisé de dépôt desdits déchets sur un tapis d'évacuation motorisé.

De préférence, ledit dispositif d'aspiration est muni d'interrupteurs d'aspiration disposés en regard dudit tapis d'évacuation motorisé.

L'évacuation des moules revêtus d'un morceau de pâte peut être faite par un tapis incliné à rouleaux fous. Cependant, pour réduire l'encombrement, on préfère que l'évacuation des moules soit faite par des rouleaux moteurs entraînés à une vitesse linéaire supérieure à celle du tapis de transfert.

L'invention sera bien comprise à la lecture de la description suivante faite en référence au dessin annexé dans lequel:
la figure 1 est une vue schématique en élévation latérale d'une machine selon un exemple de réalisation de l'invention;
la figure 2 est une vue schématique en élévation latérale de la partie centrale de la machine de la figure 1;
la figure 3 est une vue schématique en plan d'une partie des rouleaux de découpe et presseur de la machine des figures 1 et 2;
la figure 4 est une vue en plan d'un moule; et
la figure 5 est une vue en coupe selon la ligne A-A de la figure 4.

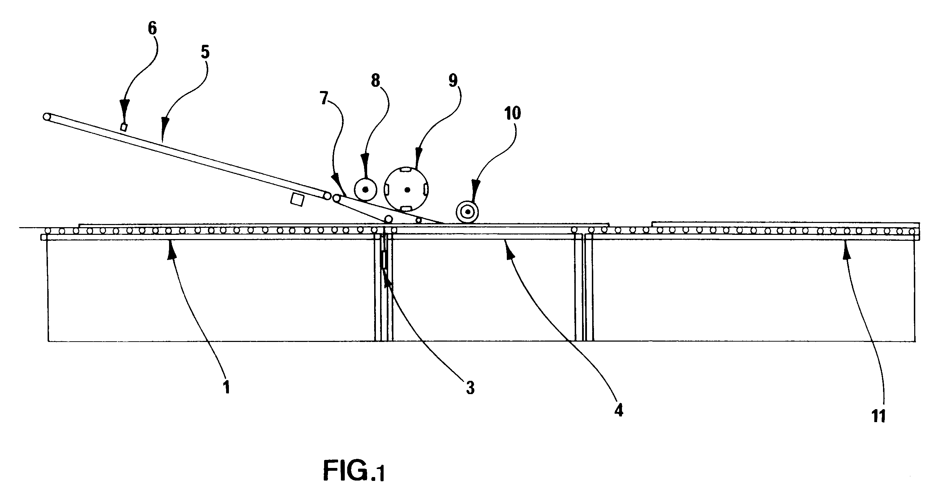

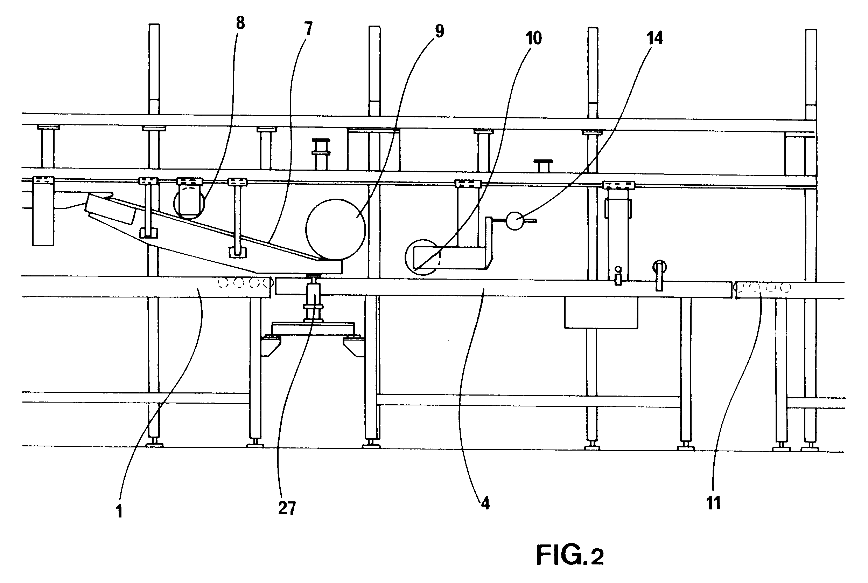

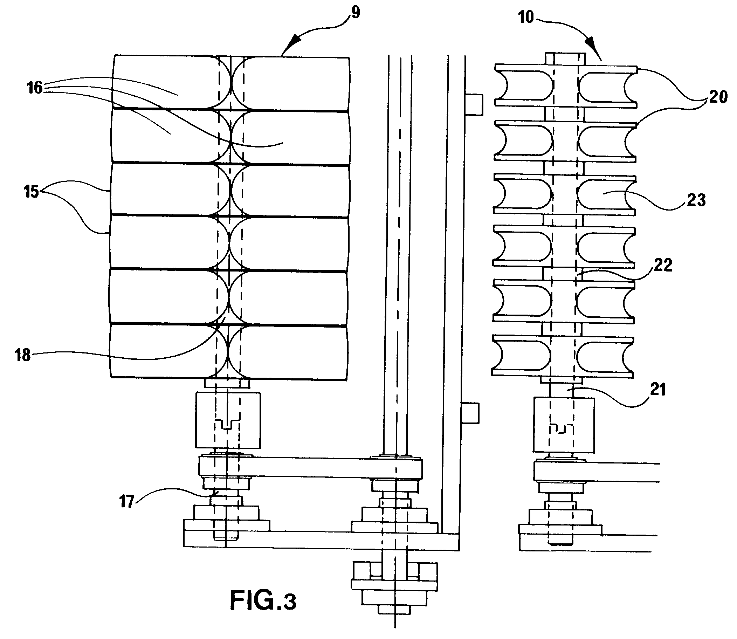

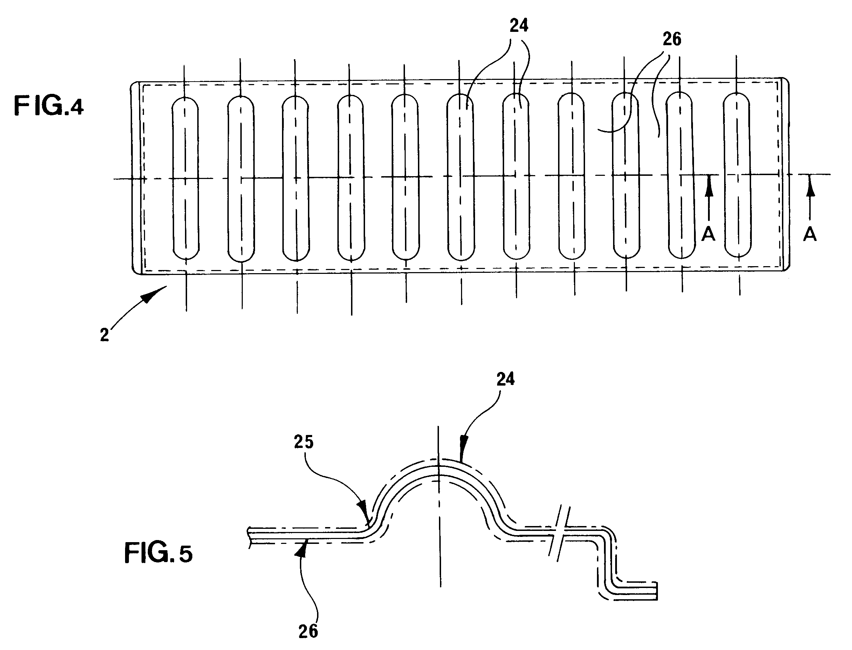

La machine représentée, qui constitue un exemple de réalisation préféré de l'invention, comprend une table 1 à rouleaux motorisés sur laquelle sont déposés, manuellement ou automatiquement, des moules de formage 2 (figures 4 et 5) qui seront décrits plus en détail ultérieurement. Un arrêtoir pneumatique 3, disposé à l'extrémité aval (à droite dans le dessin) de la table 1, bloque le passage des moules et permet de les libérer en synchronisation avec un ensemble d'amenée et de découpe de pâte qui sera décrit ci-après, la table 1 servant d'accumulateur pour les moules 2. L'arrêtoir 3 est avantageusement remplacé par un pignon (non représenté) synchronisé à la vitesse du tapis de transfert et coopérant avec une saillie ou un évidement des moules 2.

Un tapis de transfert 4 reprend les moules accumulés et les transporte en aval d'un tapis d' amenée de pâte 5 qui se raccorde vers l'amont du tapis de transfert 4. La vitesse linéaire du tapis de transfert 4, qui est égale à la vitesse linéaire du tapis d'amenée 5, est inférieure à la vitesse linéaire de la table 1, ce qui assure que les moules de formage 2 sont maintenus les uns contre les autres sur le tapis de transfert 4.

Le tapis d'amenée 5 reçoit à son extrémité amont une abaisse de pâte d'épaisseur contrôlée sortant d'un laminoir (non représenté). Un palpeur 6, de préférence à jet d'air comprimé, contrôle l'épaisseur de la pâte. Le tapis d'amenée 5 est prolongé par le brin supérieur souple d'un tapis transporteur 7 dont l'extrémité aval se raccorde sous un angle peu incliné au début du tapis de transfert 4. Le brin inférieur du tapis transporteur 7 est parallèle au tapis de transfert 4, ce qui assure un raccordement parfait grâce à un renvoi de faible diamètre.

Au-dessus du tapis transporteur 7 est disposé un rouleau scarificateur 8 suivi, dans le sens de défilement du tapis transporteur 7, d'un rouleau de découpe 9. Le rouleau scarificateur 8 porte des reliefs destinés à former des fentes dans la pâte.

A sa sortie du tapis transporteur 7, la pâte prédécoupée est portée sur les moules 2 adjacents les uns aux autres. Un rouleau presseur 10 est disposé dans cette zone en regard du tapis de transfert 4.

Les tapis 4, 5 et 7 et les rouleaux 8, 9 et 10 sont entraînés à exactement le même vitesse linéaire ou respectivement périphérique, pour garantir la pose précise de la pâte prédécoupée sur les moules 2.

A son extrémité aval, la table 4 est prolongée par une table à rouleaux libres 11 légèrement inclinée assurant l'évacuation des moules 2 chargés de pâte dans un four-tunnel (non représenté). De préférence, cependant, ces moules sont évacués par des rouleaux moteurs (non représentés) entraînés à une vitesse linéaire supérieure à celle du tapis de transfert, afin de réduire l'encombrement.

La machine comprend un dispositif (non représenté) d'aspiration à venturi des portions de pâte entre les morceaux découpés, qui sont déposés sur un tapis d'évacuation motorisé (non représenté) disposé en regard d'interrupteurs d'aspiration (non représentés).

Comme on peut le voir à la figure 2, le rouleau presseur 10 est équilibré par des contrepoids respectifs 14 afin de ne pas endommager les moules 2.

Au contraire, compte-tenu de la résistance mécanique de la pâte, il est préférable de maintenir le rouleau de découpe 9 à un écartement fixe réglable du tapis transporteur 7, par exemple au moyen d'un système à vis micrométriques (non représenté).

Le rouleau de découpe 9 est constitué de galets 15 (figure 3) en acier inoxydable. Les galets 15 comportent chacun, dans l'exemple représenté, quatre profils creux 16 à bord tranchant permettant de découper, à chaque tour du rouleau 9, quatre formes consécutivement dans la pâte. Les galets 15 sont montés jointifs sur un axe moteur 17 de manière à laisser entre les profils 16 adjacents un espace 18 en forme de carré à bords incurvés qui laissera entre les morceaux de pâte une surface minimale en forme d'étoile, assurant de ce fait un volume réduit de déchets faciles à séparer et à recycler.

Dans cet exemple, le rouleau presseur 10 est également constitué de galets 20 (figure 3) assemblés sur un axe moteur 21 et séparés par des entretoises 22. Les galets 20 peuvent être en une matière plastique de type alimentaire telle que du polyéthylène. Chaque galet 20 porte une empreinte creuse 23 qui, développée, est complémentaire d'un des reliefs 24 (figures 4 et 5) que porte le moule 2.

Les moules 2 (figures 4 et 5) sont réalisés en acier inoxydable recouvert d'un revêtement anti-adhérent 25 et présentent, dans l'exemple décrit, onze reliefs 24 complémentaires chacun d'une empreinte 23 du rouleau presseur 10. Les espaces 26 ménagés entre les reliefs 24 facilitent en outre la récupération des déchets ou chutes et ménagent les espaces nécessaires au gonflement de la pâte lors de la cuisson.

On notera à la figure 2 que le tapis transporteur 7 est monté sur un pivot vertical 27 permettant le centrage automatique de la bande de pâte déposée sur le tapis 7.

## Revendications

1. Machine de fabrication industrielle de barquettes ingérables destinées à contenir des aliments, ladite machine effectuant la découpe de morceaux individuels de pâte dans une abaisse éventuellement farinée et la pose desdits morceaux sur un relief de moulage et le transfert vers un four de cuisson,
caractérisée en ce qu'elle comprend un tapis d'amenée (5, 7) d'une abaisse de pâte d'épaisseur contrôlée depuis un laminoir, un tapis de transfert (4) portant des moules (2) jointifs munis chacun d'une pluralité de reliefs (24) alignés transversalement correspondant à la forme de la cavité de la barquette, ledit tapis de transfert (4) se raccordant à l'extrémité aval du tapis d'amenée (5), un rouleau de découpe (9) portant plusieurs séries d'empreintes (16) axiales creuses à bord coupant correspondant à la forme des morceaux à découper dans l'abaisse, ledit rouleau de découpe (9) étant disposé de manière à entrer en contact avec l'abaisse au cours de son déplacement, un rouleau presseur (10) portant au moins une série axiale empreintes creuses (23) de forme complémentaire de celle des reliefs (24) desdits moules (2), ledit rouleau presseur (10) étant disposé de manière à faire épouser à l'abaisse disposée sur les moules (2) la forme desdits reliefs (24), et des moyens de séparation et de récupération de la pâte entre les reliefs (24), lesdits rouleaux (9, 10) se déplaçant à une vitesse tangentielle égale à la vitesse dudit tapis de transfert (4) et dudit tapis d'amenée (5, 7).

2. Machine selon la revendication 1,
caractérisée en ce qu'elle comprend une table à rouleaux motorisés (1) recevant les moules (2), ladite table (1) ayant une vitesse de transfert supérieure à la vitesse de déplacement du tapis de transfert (4) et un moyen (3) d'amenée synchronisée des moules (2) sur le tapis de transfert (4).

3. Machine selon la revendication 2,
caractérisée en ce que ledit moyen d'amenée synchronisée est constitué par un arrêtoir commandé (3) interposé entre la table à rouleaux (1) et le tapis de transfert (4).

4. Machine selon la revendication 2,
caractérisée en ce que le moyen d'amenée synchronisée est constitué par un pignon synchronisé à la vitesse du tapis de transfert (4) et coopérant avec une saillie ou un évidement des moules (2).

5. Machine selon l'une des revendications 1 à 4,
caractérisée en ce que le tapis d'amenée (7) de l'abaisse est monté sur un pivot (27) pour assurer un centrage automatique de l'abaisse.

6. Machine selon l'une des revendications 1 à 5,
caractérisée en ce que le tapis d'amenée (5, 7) est équipé d'un palpeur (6) de mesure de l'épaisseur de pâte, de préférence à jet d'air comprimé.

7. Machine selon l'une des revendications 1 à 6,
caractérisée en ce que le rouleau presseur (10) est monté sur un dispositif d'équilibrage, par exemple à contrepoids (14).

8. Machine selon l'une des revendications 1 à 7,
caractérisée en ce que le rouleau de découpe (9) est maintenu à un écartement fixe réglable, par exemple au moyen d'un système à vis micrométriques.

9. Machine selon l'une des revendications 1 à 8,
caractérisée en ce que le rouleau de découpe (9) et/ou le rouleau presseur (10) sont constitués de galets individuels (15, 20) formés assemblés côte-à-côte sur un axe motorisé (17, 21) synchronisé avec le tapis d'amenée (5) de l'abaisse et le tapis de transfert (4) des moules.

10. Machine selon l'une des revendications 1 à 9,
caractérisée en ce qu'un rouleau (8) motorisé muni d'empreintes de scarification est disposé sur le tapis d'amenée (7), en contact avec la pâte.

11. Machine selon l'une des revendications 1 à 10,
caractérisée en ce que le rouleau presseur (10) est disposé en amont du rouleau de découpe (9).

12. Machine selon l'une des revendications 1 à 10,
caractérisée en ce que le rouleau de découpe (9) est disposé en regard du tapis d'amenée (5, 7) de l'abaisse.

13. Machine selon l'une des revendications 1 à 12,
caractérisée en ce qu'elle comporte un dispositif d'aspiration, de préférence à venturi, des déchets entre les morceaux séparés et d'obturation des organes d'aspiration pour le dépôt desdits déchets sur un tapis moteur d'évacuation.

14. Machine selon l'une des revendications 1 à 13,
caractérisée en ce qu'elle comprend un tapis aval incliné (11) à rouleaux fous pour l'évacuation des moules (2) revêtus d'un morceau de pâte.

15. Machine selon l'une des revendications 1 à 14,
caractérisée en ce qu'elle comprend des rouleaux moteurs entraînés à une vitesse linéaire supérieure à celle du tapis de transfert (4).

16. Machine selon l'une des revendications 1 à 15,
caractérisée en ce que le rouleau presseur (10) est en matière synthétique alimentaire, par exemple en polyéthylène.

17. Machine selon l'une des revendications 1 à 16,
caractérisée en ce que les moules (2) et le rouleau de découpe (9) sont en acier inoxydable éventuellement recouvert d'un revêtement anti-adhésif.

## Claims

1. A machine for industrial manufacture of edible boats for holding foodstuffs, the said machine cutting out individual pieces of rolled-out pastry, which may be dredged, and placing the said pieces on a moulding relief and transferring them to an oven, characterized in that it comprises a feed conveyor (5, 7) for rolled-out pastry with a thickness controlled by a thicknessing roll, a transfer conveyor (4) carrying contiguous moulds (2), each provided with a plurality of transversely aligned reliefs (24) corresponding to the shape of the cavity of the boat, the said transfer conveyor (4) adjoining the downstream end of the feed conveyor (5), a cutting-out roller (9) carrying several axial rows of hollow mould shapes (16) with cutting edges corresponding to the shape of the pieces to be cut out of the rolled-out pastry, the said cutting-out roller (9) being disposed in such a manner as to come into contact with the rolled-out pastry as it moves, a pressure roller (10) carrying at least one axial row of hollow mould shapes (23) of shape complementary to that of the reliefs (24) of the said moulds (2), the said pressure roller (10) being disposed in such a manner as to mould the rolled-out pastry positioned on the moulds (2) to the shape of the said reliefs (24), and means for separating and recovering the pastry between the reliefs (24), the said rollers (9, 10) moving with a tangential speed equal to the speed of the said transfer conveyor (4) and of the said feed conveyor (5, 7).

2. A machine according to claim 1, characterized in that it comprises a table (1) with motorised rollers receiving the moulds (2), the said table (10) having a transfer speed greater than the speed of displacement of the transfer conveyor (4), and synchronised means (3) for feeding moulds (2) on to the transfer conveyor (2).

3. A machine according to claim 2, characterized in that the said synchronised feed means is formed by a controlled stop (3) interposed between the roller table (1) and the transfer conveyor (4).

4. A machine according to claim 2, characterized in that the synchronised feed means is formed by a pinion synchronised with the speed of the transfer conveyor (4) and cooperating with a projection or a recess of the moulds (2).

5. A machine according to any one of claims 1 to 4, characterized in that the feed conveyor (7) for the rolled-out pastry is mounted on a pivot (27) in order to ensure automatic centring of the rolled-out pastry.

6. A machine according to any one of claims 1 to 5, characterized in that the feed conveyor (5, 7) is equipped with a sensor (6) for measuring the thickness of the pastry, preferably a jet of compressed air.

7. A machine according to any one of claims 1 to 6, characterized in that the pressure roller (10) is mounted on a balance device, for example with counterweights (14).

8. A machine according to any one of claims 1 to 7, characterized in that the cutting-out roller (9) is maintained at a fixed spacing, controllable by means of a micrometer screw system for example.

9. A machine according to any one of claims 1 to 8, characterized in that the cutting-out roller (9) and/or pressure roller (10) are formed by individuals rollers (15, 20) assembled side by side on a driven axle (17, 21) synchronised with the feed conveyor (5) for the rolled-out pastry and the transfer conveyor (4) for the moulds.

10. A machine according to any one of claims 1 to 9, characterized in that a driven roller (8) furnished with scarifying impressions is disposed on the feed conveyor (7) in contact with the pastry.

11. A machine according to any one of claims 1 to 10, characterized in that the pressure roller (10) is located upstream of the cutting-out roller (9).

12. A machine according to any one of claims 1 to 10, characterized in that the cutting-out roller (9) is located facing the feed conveyor (5, 7) for the rolled-out pastry.

13. A machine according to any one of claims 1 to 12, characterized in that it comprises a device, preferably a venturi device, for sucking out the scrap between the separated pieces and for blocking off the sucking members to deposit the said scraps in a driven discharge conveyor.

14. A machine according to any one of claims 1 to 13, characterized in that it comprises an inclined downstream conveyor (11) with idle rollers for discharging the moulds (2) covered with pieces of pastry.

15. A machine according to any one of claims 1 to 14, characterized in that it comprises driven rollers driven at a linear speed greater than that of the transfer conveyor (4).

16. A machine according to any one of claims 1 to 15, characterized in that the pressure roller (10) is of synthetic food product material, polyethylene for example.

17. A machine according to any one of claims 1 to 16, characterized in that the moulds (2) and the cutting-out roller (9) are of stainless steel, optionally covered with an anti-stick coating.

## Patentansprüche

1. Vorrichtung zur industriellen Herstellung von eßbaren Schalen für die Aufnahme von Nahrungsmitteln, wobei die besagte Vorrichtung das Ausschneiden einzelner Teigstücke aus einer eventuell mit Mehl bestreuten Teigschicht sowie das Ablegen der besagten Stücke auf einer Formerhebung und den Transport zu einem Backofen ausführt,
**dadurch gekennzeichnet,** daß sie ein Zuführband (5, 7) für die von einer Walzvorrichtung aus erfolgende Zuführung einer Teigschicht mit kontrollierter Dicke umfaßt, ein Transportband (4), das mehrere nebeneinanderliegende Formen (2) trägt, die jeweils mit einer Mehrzahl von in Querrichtung aufeinander ausgerichteten Erhebungen (24) entsprechend der Form der Vertiefung der Schale versehen sind, wobei sich das besagte Transportpand (4) an das hintere Ende des Zuführbands (5) anschließt, eine Schneidrolle (9), die mehrere Reihen von vertieften axialen Aufnahmen (16) mit Schneidkante entsprechend der Form der aus der Teigschicht auszuschneidenden Stücke trägt, wobei die besagte Schneidrolle (9) so angeordnet ist, daß sie mit der Teigschicht im Verlauf ihrer Bewegung in Berührung kommt, eine Andrückrolle (10), die mindestens eine axiale Reihe von vertieften Aufnahmen (23) trägt, die formschlüssig mit den Erhebungen (24) der besagten Formen (2) ausgeführt sind, wobei die besagte Andrückrolle (10) so angeordnet ist, daß sie die auf den Formen (2) angeordnete Teigschicht an die Form der besagten Erhebungen (24) anpaßt, sowie Mittel zur Abtrennung und Rückführung des Teigs zwischen den Erhebungen, wobei sich die besagten Rollen (9, 10) mit einer Tangentialgeschwindigkeit gleich der Geschwindigkeit des besagten Transportbands (4) und des besagten Zuführbands (5, 7) bewegen.

2. Vorrichtung nach Anspruch 1,
**dadurch gekennzeichnet,** daß sie einen motorgetriebenen Rollgang (1) für die Aufnahme der Formen (2) umfaßt, wobei dieser Rollgang (1) eine Transportgeschwindigkeit hat, die höher als die Laufgeschwindigkeit des Transportbands (4) ist, und ein Mittel (3) für die synchronisierte Zuführung der Formen (2) auf dem Transportband (4).

3. Vorrichtung nach Anspruch 2,
**dadurch gekennzeichnet,** daß das besagte synchronisierte Zuführmittel aus einer gesteuerten Sperrvorichtung (3) besteht, die zwischen dem Rollgang (1) und dem Transportband (4) angeordnet ist.

4. Vorrichtung nach Anspruch 2,
**dadurch gekennzeichnet,** daß das synchronisierte Zuführmittel aus einem Ritzel besteht, das auf die Geschwindigkeit des Transportbands (4) synchronisiert ist und mit einem Vorsprung oder einer Aussparung der Formen (2) zusammenwirkt.

5. Vorrichtung nach einem der Ansprüche 1 bis 4,
**dadurch gekennzeichnet,** daß das Zuführband (7) für die Zuführung der Teigschicht auf einem Drehzapfen (27) gelagert ist, um eine automatische Zentrierung der Teigschicht herbeizuführen.

6. Vorrichtung nach einem der Ansprüche 1 bis 5,
**dadurch gekennzeichnet,** daß das Zuführband (5, 7) mit einem Fühler (6) zur Messung der Teigdicke, vorzugsweise mit Druckluftstrahl, ausgerüstet ist.

7. Vorrichtung nach einem der Ansprüche 1 bis 6,
**dadurch gekennzeichnet,** daß die Andrückrolle (10) auf einer Ausgleichvorrichtung, beispielsweise mit Gegengewicht (14), angebracht ist.

8. Vorrichtung nach einem der Ansprüche 1 bis 7,
**dadurch gekennzeichnet,** daß die Schneidrolle (9), beispielsweise mittels eines Systems mit Feineinstellschrauben, auf einem einstellbaren festen Abstand gehalten wird.

9. Vorrichtung nach einem der Ansprüche 1 bis 8,
**dadurch gekennzeichnet,** daß die Schneidrolle (9) und die Andrückrolle (10) aus geformten Einzelrollen (15, 20) bestehen, die auf einer motorgetriebenen Achse (17, 21) aneinander angefügt sind, die mit dem Zuführband (5) für die Teigschicht und dem Transportband (4) für die Formen synchronisiert ist.

10. Vorrichtung nach einem der Ansprüche 1 bis 9,
**dadurch gekennzeichnet,** daß eine mit Einritzaufnahmen versehene motorgetriebene Rolle (8) auf dem Zuführband (7), in Kontakt mit dem Teig, angeordnet ist.

11. Vorrichtung nach einem der Ansprüche 1 bis 10,
**dadurch gekennzeichnet,** daß die Andrückrolle (10) vor der Schneidrolle (9) angeordnet ist.

12. Vorrichtung nach einem der Ansprüche 1 bis 10,
**dadurch gekennzeichnet,** daß die Schneidrolle (9) gegenüber dem Zuführband (5, 7) für die Teigschicht angeordnet ist.

13. Vorrichtung nach einem der Ansprüche 1 bis 12,
**dadurch gekennzeichnet,** daß sie eine Vorrichtung für die, vorzugsweise mittels Venturidüse erfolgende, Absaugung der Abfälle zwischen den getrennten Stücken und für den Verschluß der Saugorgane für die Ablage der besagten Abfälle auf einem motorgetriebenen Abführband umfaßt.

14. Vorrichtung nach einem der Ansprüche 1 bis 13,
**dadurch gekennzeichnet,** daß sie ein nachgeordnetes Losrollen-Schrägband (11) für die Abführung der mit einem Teigstück belegten Formen (2) umfaßt.

15. Vorrichtung nach einem der Ansprüche 1 bis 14,
**dadurch gekennzeichnet,** daß sie Antriebsrollen umfaßt, die mit einer höhren Lineargeschwindigkeit als das Transportband (4) angetrieben werden.

16. Vorrichtung nach einem der Ansprüche 1 bis 15,
**dadurch gekennzeichnet,** daß die Andrückrolle (10) aus lebensmittelverträglichem Kunststoff, beispielsweise aus Polyethylen, besteht.

17. Vorrichtung nach einem der Ansprüche 1 bis 16,
**dadurch gekennzeichnet,** daß die Formen (2) und die schneidrolle (9) aus nichtrostendem Stahl bestehen, der gegebenenfalls mit einer Antihaftbeschichtung überzogen ist.
